# EUROPEAN PATENT APPLICATION

(11) **EP 1 918 085 A1**
(43) Date of publication of application: **07.05.2008**
(21) Application number: 07743529.5
(22) Date of filing: 17.05.2007
(51) Int. Cl.: B29D 30/04, B29C 73/02, B29C 73/24, C08L 25/02

(54) **METHOD OF INJECTING LIQUID SOLUTION RESIN INTO TIRE TUBE, AND INJECTION DEVICE, AND TIRE TUBE FILLING ELASTIC RESIN COMPOSITION**

(30) Priority: 30.05.2006 JP 2006149122; 05.06.2006 JP 2006155815
(71) Applicant: Kabushikigaisha Katazen, Yokone-cho Obu-city Aichi 474-0011 (JP)
(72) Inventor: KONDO, Kumeo, Obu-shi, Aichi 474-0062 (JP); KATO, Nobuji, Toyoake-shi, Aichi 470-1105 (JP)
(74) Representative: Kramer - Barske - Schmidtchen
(86) International application number: PCT/JP2007/060094
(87) International publication number: WO 2007/138864

(57) **Abstract**

In the invention, a valve main body of a tire and an injection nozzle of an injection nozzle device are connected with a stopper pipe, a liquid resin is injected and filled in a tire inner tube, the stopper pipe is squashed, after filling up, at an intermediate exposed part thereof to prevent the filled resin in the tire inner tube from being leaked, and then the connection of the injection nozzle and the stopper pipe is released. Accordingly, the tire immediately after filling the liquid resin in the tire inner tube is detached from the injection nozzle in the state where the filled resin in a liquid state in the tire inner tube is prevented from being leaked, and the subsequent tire can be mounted, whereby there is no necessity of maintaining the state where the injection nozzle is connected to the tire until the liquid resin filled in the tire inner tube is gelled, and thus the operation of injecting and filling the liquid resin in the tire inner tube can be continuously carried out.

## Description

### TECHNICAL FIELD

The present invention relates to a method for injecting a resin, which is in a liquid state by heating an elastic resin composition, into a tire inner tube of a bicycle, a wheel chair, a unicycle, a mountain bicycle or the like through a tire valve, an apparatus therefor, and an elastic resin composition for filling a tire inner tube.

### BACKGROUND ART

An elastic resin composition is a mixture of a thermoplastic elastomer and a process oil at a prescribed ratio, and the elastic resin composition is heated to 180°C or less, at which a tire inner tube is not thermally damaged, to provide a liquid resin having a viscosity of from 10 cP to 300 P, which can be injected through an ordinary valve main body having an inner diameter of several millimeter, which constitutes a tire valve.

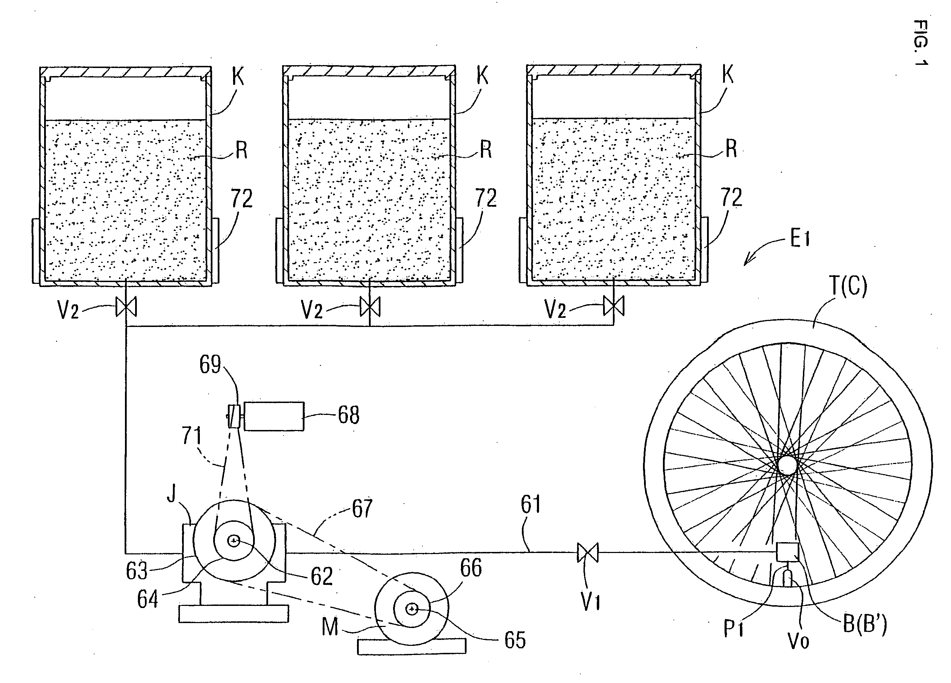

Fig. 1 is an overall view of a resin injection apparatus that injects the liquid resin R into an inner tube C of a tire T by utilizing a tire valve v0. Plural resin tanks K, in which the liquid resin R is housed under heating, are disposed in parallel to each other, and a pump J is installed in the course of a resin injection tube 61 that connects the resin tanks K and the tire valve V0. The pump J is driven with a motor M to aspirate the liquid resin R in the resin tank K through an aspirating port of the pump J and to discharge it from the discharging port thereof, whereby the liquid resin R can be injected into the tire inner tube C through an injection nozzle device B' and the tire valve V0. Two pulleys large and small 63 and 64 are attached to a driving rotation shaft 62 of the pump J, a belt 67 is stretched between the large pulley 63 of the pump J and a pulley 66 attached to a driving shaft 65 of the motor M, and a belt 71 is stretched between the small pulley 64 of the pump J and a pulley 69 of a rotation number detector 68. According to the structure, the rotation number of the driving rotation shaft 62 of the pump J, i.e., the discharge amount of the liquid resin R discharged from the pump J, is detected with the rotation number detector 68, and the pump J is stopped when the driving rotation shaft 62 of the pump J is rotated in a prescribed number. The discharge amount of the liquid resin R discharged from the pump J is identical to the injection amount of the liquid resin R into the tire inner tube C, and therefore, the injection amount of the liquid resin R into the tire inner tube C can be controlled with the rotation number detector 68.

After filling up the tire inner tube C with the liquid resin R injected in the injection amount having been set by the rotation number detector 68, a valve (which is not shown in the figure) provided in the injection nozzle device B' is closed to prevent the resin filled in the tire inner tube C from being regurgitated, and by allowing to stand for a prescribed period of time, the liquid resin R in the tire inner tube C is gelled to provide an elastic resin, thereby providing a puncture-free tire free of puncture capable of ensuring "riding quality" that is equivalent to a pneumatic tire. In Fig. 1, symbol 72 denotes a heater that heats the resin tank K, V1 denotes a closing valve installed in the resin injection tube 61, and V2 denotes a closing valve installed between the resin tank K and the resin injection tube 61.

A conventional injection nozzle device known in the art is disclosed in Patent Document 1 . The device has such a basic structure in that a pipe main body equipped with a stopper ring is pressed into a valve main body by utilizing rotation of a valve nut to make a tip taper part in contact under pressure with a taper part of an aeration pore of the valve main body, a liquid resin is injected in that state into a tire inner tube through the pipe main body, and after filling up, the injection path bent at a right angle in the injection nozzle device is closed with a rod-like valve to prevent the filled resin from being regurgitated, followed by allowing to stand for a prescribed period of time to make the liquid resin in the tire inner tube be gelled (solidification).

Accordingly, unless the liquid resin filled in one tire inner tube is completely gelled, the liquid resin cannot be injected to the subsequent tire inner tube, which brings about deterioration in resin injection efficiency to tire inner tubes. For improving the resin injection efficiency, it is necessary that plural resin injection apparatuses having the same structure are used, or a raw material tank and a pump commonly are used with plural nozzle devices by switching a valve. In the former case, the cost is increased due to purchase of the plural apparatuses, and in the later case, it is necessary to switch the valve for changing the tires, into which the resin is injected, and the switching operation becomes complicated, although the cost can be suppressed from being increased.
Patent Document 1: JP-A-2006-62338

### DISCLOSURE OF THE INVENTION

### PROBLEMS TO BE SOLVED BY THE INVENTION

Accordingly, an object of the invention is to make enable detachment of a tire from an injection apparatus immediately after filling up a liquid resin in a tire inner tube to improve the injection efficiency of the liquid resin, to make enable injection of the liquid resin into the tire inner tube with adjustment of the filling pressure without the use of a compressor, and to provide an elastic resin composition having excellent shock absorption property for providing good riding quality.

### MEANS FOR SOLVING THE PROBLEMS

For solving the problems, a first aspect of the invention is a method for injecting a resin, which is in a liquid state by heating an elastic resin composition, into a tire inner tube of a bicycle or the like, characterized in that: a stopper pipe is used to press under pressure one end of the stopper pipe onto a tapered inner peripheral surface of an aeration pore of a valve main body by tightening a nut of the valve, to make a sealed state and to prevent the stopper pipe from being released with a resin pressure after filling; in a state where the stopper pipe is mounted to the valve main body in the aforementioned manner, an injection nozzle device and the valve of the tire are made relatively close to each other to press under pressure the other end of the stopper pipe onto a tapered inner peripheral surface of a resin discharging port of an injection nozzle to make a sealed state, whereby the injection nozzle and the valve main body are connected with the stopper pipe with the sealed state maintained; and in the connected state, the liquid resin is injected into the tire inner tube through the stopper pipe and the valve until fill-up, the stopper pipe is squashed at an intermediate position thereof immediately after filling up, to prevent the filled resin from being leaked, and in the state, the liquid resin filled in the tire inner tube is gelled.

According to the first aspect of the invention, one end of the stopper pipe is pressed under pressure onto the tapered inner peripheral surface of the valve main body by tightening the nut of the valve, whereby the stopper pipe is mounted to the valve of the tire with a sealed state. In the state where the stopper pipe is mounted to the valve main body in the aforementioned manner, the valve of the tire and the injection nozzle device are made relatively close to each other to press under pressure the other end of the stopper pipe onto the tapered inner peripheral surface of the resin discharging port of the injection nozzle, whereby the injection nozzle and the valve main body are connected with the stopper pipe with the sealed state maintained. In this state, the liquid resin in a raw material tank is injected into the tire inner tube through the injection nozzle, the stopper pipe and the tire valve by driving a resin injection apparatus to utilize a discharging pressure of a pump or the like.

After confirming that the liquid resin has been injected into the tire inner tube until fill-up, the stopper pipe is squashed at an intermediate position thereof with a squashing tool to prevent the resin having been filled in the tire inner tube from being leaked. In this state, the injection nozzle device and the valve of the tire are made relatively away from each other, whereby the stopper pipe and the injection nozzle are made away from each other to separate the tire from the injection nozzle device, since the end of the stopper pipe on the side of the tire valve (i.e., the lower end) is connected as being prevented from being released from the tire valve with the valve nut, but the end of the stopper pipe on the side of the injection nozzle (i.e., the upper end) is only sealed to the tapered inner peripheral surface of the resin discharging port by simply pressing under pressure.

Accordingly, the tire is allowed to stand for a prescribed period of time in a state where the tire is separated from the injection nozzle device, whereby the liquid resin filled in the tire inner tube is gelled (solidified). Therefore, immediately after squashing the stopper pipe at an intermediate position thereof to prevent the liquid resin in the tire inner tube from being leaked, the tire immediately after filled with the liquid resin is separated from the injection nozzle of the injection nozzle device, and then the subsequent tire is connected to the part of the injection nozzle of the injection nozzle device through a stopper pipe, whereby an injecting operation of the liquid resin can be carried out for the subsequent tire. According to the first aspect of the invention, in this manner, the tire immediately after filling the liquid resin in the tire inner tube thereof can be detached from the injection nozzle of the injection nozzle device in the state where the filled resin in a liquid state in the tire inner tube is prevented from being leaked, and the subsequent tire can be mounted, whereby there is no necessity of maintaining the state where the injection nozzle of the injection nozzle device is connected to the tire until the liquid resin filled in the tire inner tube is gelled, and thus the operation of injecting and filling the liquid resin in the tire inner tube can be continuously carried out.

A second aspect of the invention is characterized in that in the first aspect of the invention, the stopper pipe has a flange at an intermediate position of a pipe main body having an outer diameter that is capable of being inserted into the aeration pore of the valve main body, and the flange is pressed under pressure toward the side of the valve main body with an inner flange of the nut of the valve by tightening the nut of the valve to the valve main body.

. According to the second aspect of the invention, when the valve nut is tightened in the state where the stopper pipe is inserted into the aeration pore of the valve main body, the inner flange of the valve nut is made in contact with the flange of the stopper pipe, and when the valve nut is further tightened, the end of the stopper pipe (i.e., the lower end) is pressed under pressure onto the tapered inner peripheral surface of the aeration pore of the valve main body to ensure a sealed state and to prevent the stopper pipe from being released from the valve main body, so as to facilitate the mounting operation of the stopper pipe to the valve main body.

A third aspect of the invention is characterized in that in the first aspect of the invention, the stopper pipe has an increased diameter part having an outer diameter that is smaller than an inner diameter of the aeration pore of the valve main body and is larger than an inner diameter of the inner flange of the nut of the valve, and a general part having an outer diameter that is smaller than the inner diameter of the inner flange of the nut of the valve.

According to the third aspect of the invention, when the valve nut is tightened in the state where the stopper pipe is inserted into the aeration pore of the valve main body as similar to the second aspect of the invention, the inner flange of the valve nut bites into the increased diameter part of the stopper pipe, and the end of the stopper pipe (i.e., the lower end) is pressed under pressure onto the tapered inner peripheral surface of the valve main body to ensure a sealed state.

A fourth aspect of the invention is an apparatus for carrying out the first aspect of the invention, characterized in that the apparatus contains a tire suspending device having a tire suspending pipe that is attached thereto substantially horizontally and is for suspending a tire having a stopper pipe mounted thereto by having been inserted into a tire valve at a position of a prescribed height of a supporting post, and an injection nozzle device having an injection nozzle that is disposed substantially immediately above the valve of the tire suspended on the tire suspending pipe of the tire suspending device to make the valve of the tire be disposed at the lowest position; at least one of the tire suspending pipe and the injection nozzle device is capable of being ascended and descended by a driving means; and at least one of the tire suspending pipe and the injection nozzle device is ascended or descended such that the distance therebetween is decreased, whereby an upper end of the stopper pipe mounted on the valve of the tire suspended on the tire suspending pipe on the supporting post is inserted into a resin discharging port of the injection nozzle of the injection nozzle device and is pressed under pressure onto a tapered inner peripheral surface thereof.

According to the fourth aspect of the invention, the tire is suspended on the tire suspending pipe of the tire suspending device in such a manner that the valve is disposed at the lowest position, and in this state, at least one of the tire suspending pipe and the injection nozzle device is ascended or descended by the driving means to decrease the distance between the tire suspending pipe and the injection nozzle device, whereby the upper end of the stopper pipe mounted on the valve of the tire suspended on the tire suspending pipe is inserted into the resin discharging port of the injection nozzle of the injection nozzle device and is pressed under pressure onto the tapered inner peripheral surface thereof. According to the structure, the lower end of the stopper pipe is pressed under pressure onto the tapered inner peripheral surface of the aeration pore of the tire valve to ensure a sealed state, and the upper end of the stopper pipe is pressed under pressure onto the tapered inner peripheral surface of the resin discharging port of the injection nozzle to ensure a sealed state.

In this state, the liquid resin is injected into the tire inner tube through the injection nozzle, the stopper pipe and the tire valve by driving the resin injection apparatus. After filling the liquid resin in the tire inner tube until fill-up, the stopper pipe is squashed at an intermediate exposed part thereof with a squishing tool or the like to prevent the filled resin from being leaked, and in this state, at least one of the tire suspending pipe and the injection nozzle device is ascended or descended in the direction opposite to that before injecting the resin, whereby the stopper pipe is released from the injection nozzle. The tire is then detached from the tire suspending pipe with the liquid resin filled in the tire inner tube being in a liquid state before gelling (solidifying), and the subsequent tire is suspended on the tire suspending pipe, followed by carrying out the same operation above to the subsequent tire to inject the liquid resin into the tire inner tube thereof.

A fifth aspect of the invention is characterized in that in the fourth aspect of the invention, a pair of the tire suspending pipes are disposed with a prescribed distance in a horizontal direction.

According to the fifth aspect of the invention, the tire is suspended with a pair of the tire suspending pipes disposed with a prescribed distance in a horizontal direction, whereby the suspended tire is not waved horizontally to stabilize the suspended position. Accordingly, the tire can be easily suspended with the valve of the tire disposed at the lowest position, and the suspended tire is not waved horizontally, whereby there is no deviation between the axis of the stopper pipe mounted to the valve of the tire and the axis of the injection nozzle, and the stopper pipe can be certainly inserted to the injection nozzle.

A sixth aspect of the invention is characterized in that in the fourth or fifth aspect of the invention, a sliding body capable of being ascended and descended is supported by the supporting post through a driving means, and the tire suspending pipe is supported by the sliding body.

According to the sixth aspect of the invention, the injection nozzle device having the injection nozzle can be immobilized and need not be ascended and descended, whereby the resin injection tube connected to the injection nozzle device can also be immobilized to prevent damages of the injection nozzle device and the resin injection tube on ascending and descending the injection nozzle device.

A seventh aspect of the invention is characterized in that in the sixth aspect of the invention, the sliding body has a length exceeding an outer diameter of the tire, and a tire depressing pipe is attached substantially horizontally to a lower end of the sliding body, the tire depressing pipe depressing the tire after filling the tire inner tube with the liquid resin for detaching the stopper pipe from the injection nozzle.

According to the seventh aspect of the invention, there is a case where the stopper pipe is adhered to the injection nozzle and cannot be easily separated therefrom due to partial gelation of the liquid resin passing through the part of the injection nozzle after injecting the liquid resin into the tire inner tube. In this case, when the sliding body is descended with the driving means, the tire depressing pipe in contact with the tire rim depresses the tire downward, whereby the stopper pipe can be certainly separated from the injection nozzle.

An eighth aspect of the invention is an elastic resin composition for filling a tire inner tube by injecting into the tire inner tube through an inflation valve of the tire, characterized by containing from 10 to 20% by weight of a styrene thermoplastic elastomer, from 5 to 15% by weight of a tackifier and from 65 to 85% by weight of a process oil, and having a melt viscosity of from 10 cP to 300 P at a melting temperature of 160°C.

The elastic resin composition in a liquid state for filling a tire inner tube of the eighth aspect of the invention is injected into the tire inner tube through the valve with a pressure injection means, such as a pump, to fill the tire inner tube therewith. In the case at this time where the mixing ration of the materials of the elastic resin composition provides a melt viscosity of from 10 cP to 300 P, the elastic resin composition has such flowability (viscosity) in that the resin composition can easily flow through the small valve for injecting into the inner tube. Accordingly, the elastic resin composition can be injected and filled into the tire inner tube easily without problem.

Due to the effect of the tackifier the elastic resin composition having been gelled after filling has an adhesion force to the inner peripheral surface of the tire inner tube corresponding to a prescribed perpendicular peeling force thereto, and is adhered thereto. Accordingly, the gelled elastic resin composition in a torus form and the tire inner tube are improved in unity to improve the riding quality. Even in the case where voids are formed due to entrainment of air upon injecting the elastic resin composition or shortage of the injected resin, the gelled elastic resin composition is not peeled off from the tire inner tube. Accordingly, air is hard to accumulate at the interface between an inner peripheral surface of the tire inner tube and the gelled resin upon running with the tire, and even though air accumulates, no large air bubble due to accumulation of air is not formed, whereby good riding quality is maintained for a prolonged period of time.

A ninth aspect of the invention is characterized in that in the eighth aspect of the invention, the gelled elastic resin composition has a perpendicular peeling force of from 0.1 to 0.5 N/cm² at ordinary temperature.

According to the ninth aspect of the invention, in addition to the advantages of the eight aspect of the invention, when the mixing ratio of the tackifier provides a perpendicular peeling force of the gelled elastic resin composition of from 0.1 to 0.5 N/cm² at ordinary temperature, the gelled elastic resin composition can retain both the elastic force (shock absorption property) and the necessary tacking (adhesion) force to the tire inner tube, whereby good riding quality as tire can be ensured.

### ADVANTAGES OF THE INVENTION

In the first aspect of the invention, the valve main body of the tire and the injection nozzle of the injection nozzle device are connected with the stopper pipe, and the liquid resin is injected and filled into the tire inner tube. After filling up, the stopper pipe is squashed at the intermediate exposed part thereof to prevent the filled resin in the tire inner tube from being leaked, and then the connection of the injection nozzle and the stopper pipe is released. Accordingly, the tire immediately after filling the tire inner tube with the liquid resin can be detached from the injection nozzle in the state where the filled resin in a liquid state in the tire inner tube is prevented from being leaked, and then the subsequent tire can be mounted, whereby there is no necessity of maintaining the connected state between the injection nozzle and the tire until the liquid resin filled in the tire inner tube is gelled, and thus the operation of injecting and filling the liquid resin in the tire inner tube can be continuously carried out.

According to the eighth aspect of the invention, a tackifier is added to the thermoplastic elastomer and the process oil, whereby such an elastic resin composition is obtained that has flowability upon melting capable of being injected and filled in the tire inner tube through the valve, and has an adhesion force to the inner tube in addition to elasticity after gelling (solidifying) by cooling. Accordingly, by using the elastic resin composition as a filling of a tire inner tube, such a tire can be easily produced within a short period of time that has excellent shock absorption and does not suffer large deterioration in riding quality even in the case where a certain amount of air is entrained in the tire inner tube.

### BRIEF DESCRIPTION OF THE DRAWINGS

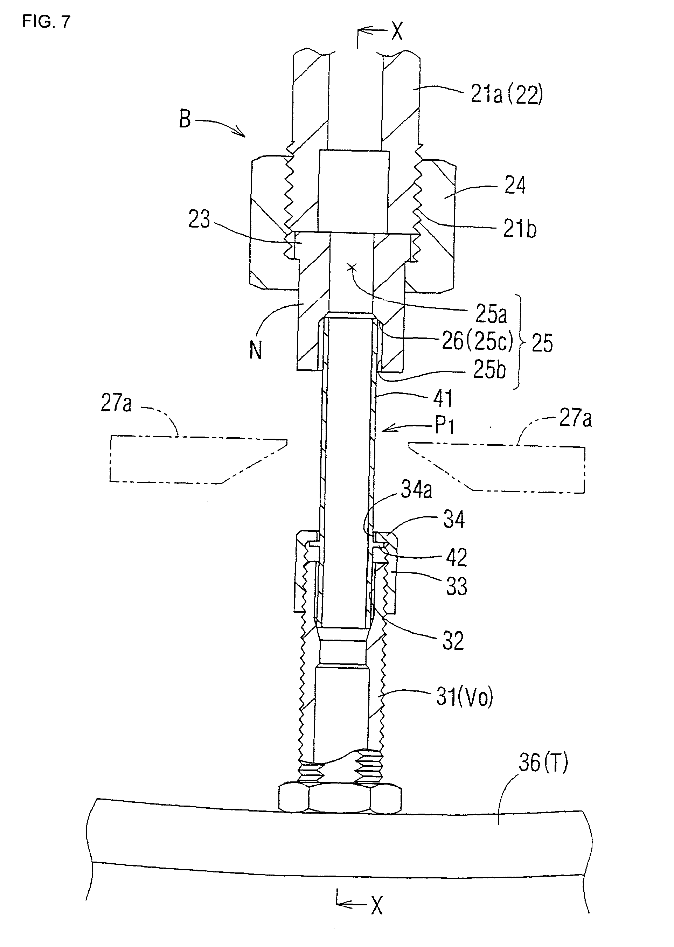

[Fig. 1]
   The figure is an overall view of a resin injection apparatus E1 injecting a liquid resin R into a tire inner tube C by utilizing a tire valve V0.
[Fig. 2]
   The figure is an overall perspective view of a tire suspending device A and an injection nozzle device B according to the invention of the resin injection apparatus E1.
[Fig. 3]
   The figure is a side view of the same.
[Fig. 4]
   The figure is a partial enlarged perspective view of the same upon injecting a liquid resin R.
[Fig. 5]
   The figure is an elevational view of the state where a tire T is suspended by a tire suspending device A before inserting a stopper pipe P1 into an injection nozzle N.
[Fig. 6]
   The figure is an elevational view of the same in the state where the stopper pipe P1 is inserted into the injection nozzle N.
[Fig. 7]
   The figure is an elevational cross sectional view of a part of a tire valve V0 and an injection nozzle N in a resin injection state.
[Fig. 8]
   The figure is a cross sectional view on line X-X in Fig. 7 in the state where a liquid resin R is injected.
[Fig. 9]
   The figure is a cross sectional view of the state where a plug (inflation tube) 37 in a valve main body 31 of a tire valve V0 is detached, and a stopper pipe P1 is inserted thereto.
[Fig. 10]
   The figure is a cross sectional view of the state where the stopper pipe P1 mounted on the valve main body 31 is inserted into an injection nozzle N immediate above the same by ascending the tire T.
[Fig. 11]
   The figure is a cross sectional view of the state where the stopper pipe P1 is squashed at an intermediate exposed part thereof to prevent the liquid resin R filled in the tire inner tube C from being leaked.
[Fig. 12]
   The figure is a cross sectional view of the state where the stopper pipe P1 is withdrawn from the injection nozzle N by descending the tire T.
[Fig. 13]
   The figure is a cross sectional view of the state where a valve nut 33 is detached from the valve main body 31.
[Fig. 14]
   The figure is a cross sectional view of the state where the resin gelled in the valve main body 31 is withdrawn.
[Fig. 15]
   The figure is a cross sectional view of the state where the plug 37 is placed back to the valve main body 31, and a cap 38 is screwed thereon.
[Fig. 16]
   The figure is a cross sectional view of the state where a valve main body 31 is connected to an injection nozzle N through a stopper pipe P2.
[Fig. 17]
   The figure is an overall view of a resin injection apparatus E2 injecting a liquid resin R into a tire inner tube C by using an intermediate pressure accumulator tank 80.
[Fig. 18]
   The figures are cross sectional views of a tire in the peripheral direction thereof, showing change of air bubbles 91 entrained in a tire inner tube C upon filling an elastic resin composition R1 in a liquid state (liquid resin R1) having no adhesion force after gelation.
[Fig. 19]
   The figures are cross sectional views of a tire in the peripheral direction thereof, showing change of air bubbles 91 entrained in a tire inner tube C upon filling an elastic resin composition R in a liquid state (liquid resin R) having an adhesion force after gelation.
[Fig. 20]
   The figure is a table showing evaluation results of an elastic resin composition R of the invention as Examples and another composition R1 as Comparative Examples.

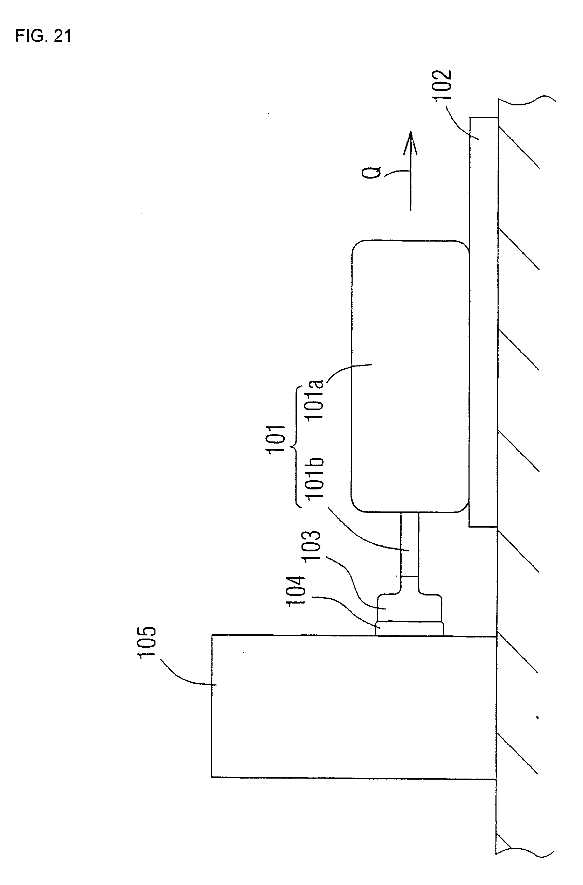

[Fig. 21] The figure is a schematic illustration of an evaluation test of a perpendicular peeling force.

### DESCRIPTION OF SYMBOLS

- A:: tire suspending device
- B, B':: injection nozzle device
- C:: tire inner tube
- E1, E2:: resin injection apparatus
- N, N':: injection nozzle
- P1, P2:: stopper pipe
- R:: liquid resin
- V0:: tire valve
- 2:: supporting post
- 5:: sliding body
- 7:: air cylinder (driving means)
- 9:: tire suspending pipe
- 11:: tire depressing pipe
- 25:: resin discharging port of injection nozzle
- 26:: tapered inner peripheral surface of resin discharging port
- 31:: valve main body
- 32:: aeration pore of valve main body
- 32a:: tapered inner peripheral surface of aeration pore
- 33:: valve nut
- 41:: pipe main body

### BEST MODE FOR CARRYING OUT THE INVENTION

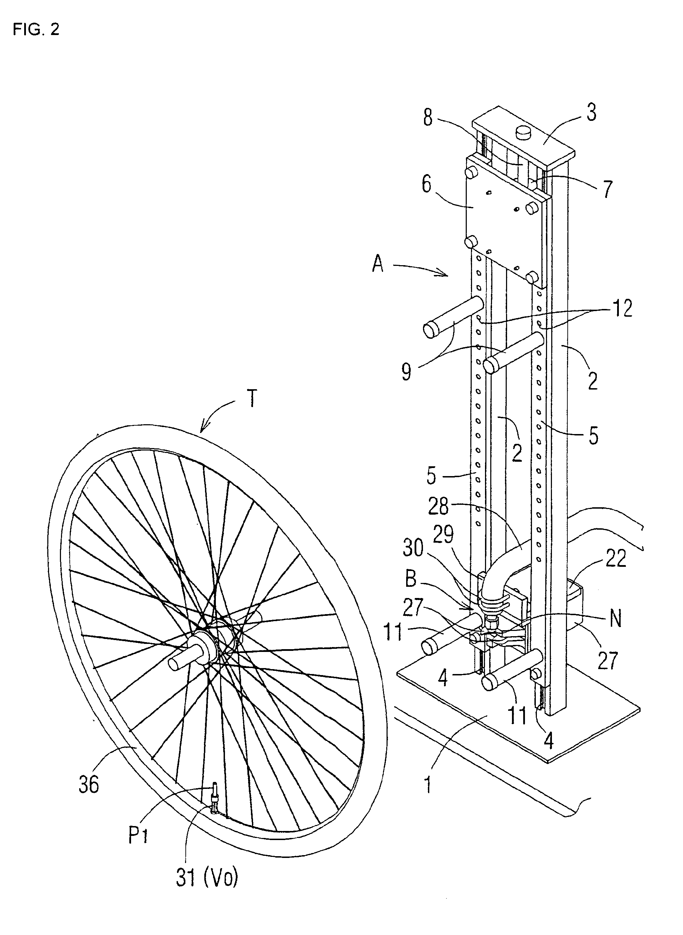

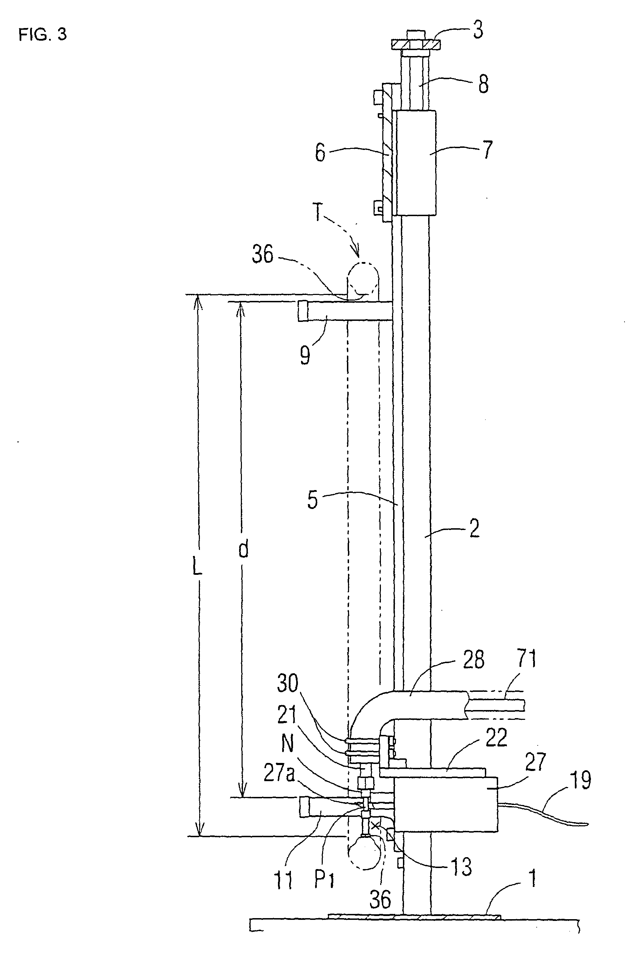

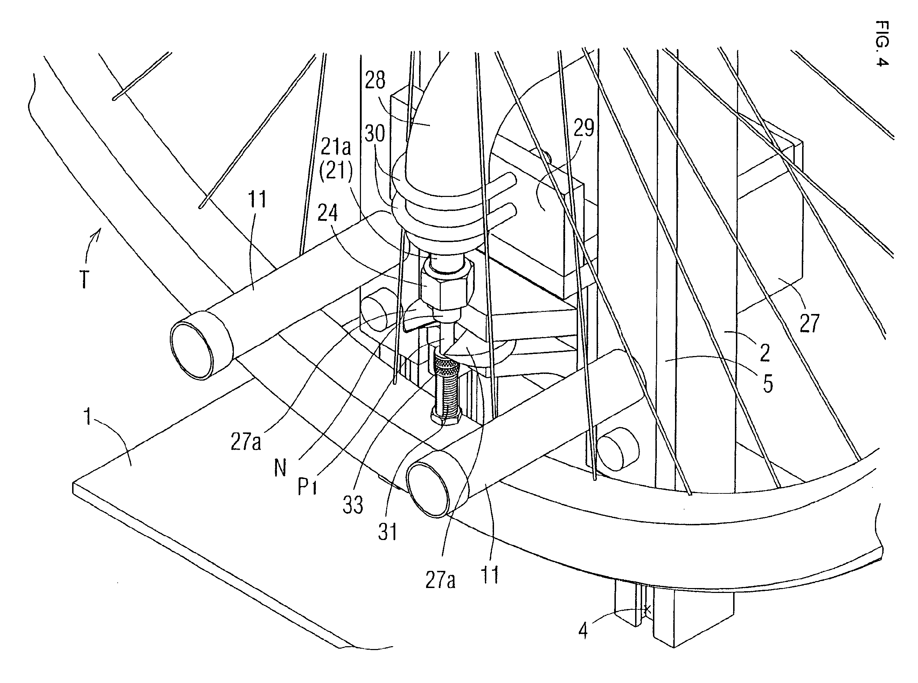

The invention will be described in more detail below with reference to the best embodiment of the invention. In the invention, a tire suspending device A is installed in a resin injection apparatus E1 described in "Background Art", and a stopper pipes P1, P2 inserted into a valve main body 31 of a tire valve V0 are used, whereby the operation of injecting and filling a liquid resin R in the tire inner tube C can be continuously carried out. Accordingly, the invention is carried out on the injection nozzle device B and the side of the tire T with respect thereto among the items described in the chapter "Background Art", and only the injection nozzle device B and the characteristic structure of the invention will be described to avoid duplicate explanation since the structures of the plural resin tanks K, the pump J, the motor M and the rotation number detector 68 are the same as those in the resin injection apparatus E1 described in "Background Art". Fig. 2 is an overall perspective view of a tire suspending device A and an injection nozzle device B according to the invention of the resin injection apparatus E1, Fig. 3 is side view of the same, and Fig. 4 is a partial enlarged perspective view of the same upon injecting the liquid resin R. In Figs. 2 to 4, the resin injection apparatus E1 is equipped with a tire suspending device A for suspending a tire T and an injection nozzle device B equipped with an injection nozzle N disposed substantially immediately above a tire valve V0 suspended by the tire suspending device A to make the tire valve V0 be disposed at the lowest position.

The tire suspending device A has a pedestal 1 having disposed upright a pair of supporting posts 2 with a prescribed distance in the transversal direction (horizontal direction), and the upper ends thereof are connected with a horizontal connecting plate 3. Sliding bodies 5 are fit slidingly in the vertical direction to sliding grooves 4 on the front faces of the supporting posts 2, respectively, and the upper ends of the sliding bodies 5 are connected with a vertical connecting plate 6. An upper end of a rod 8 of an air cylinder 7 fixed to the back face of the vertical connecting plate 6 is connected to the horizontal connecting plate 3, and the pair of left and right sliding bodies 5 are ascended and descended (moved in the vertical direction) by entrance and exit of the rod 8 of the air cylinder 7. The sliding bodies 5 have a length that sufficiently exceeds the outer diameter of the tire T. Tire suspending pipes 9 are attached horizontally to the upper ends of the sliding bodies 5 at the same height, and tire depressing pipes 11 are similarly attached to the lower ends of the sliding bodies 5. The attached positions of the tire depressing pipes 11 with respect to the sliding bodies 5 are fixed. The sliding bodies 5 have a large number of screw holes 12 formed with a prescribed distance in the vertical direction, and screw parts (which is not shown in the figures) of the tire suspending pipes 9 are screwed in any of the screw holes 12, whereby the attached positions of the tire suspending pipes 9 with respect to the sliding bodies 5 in the vertical direction can be changed corresponding to the outer diameter of the tire T. It is necessary that the distance (L) between the outer peripheries of the tire suspending pipes 9 and the outer peripheries of the tire depressing pipes 11 (see Fig. 3) is slightly smaller than an inner diameter (d) of a rim 36 of the tire T.

The injection nozzle device B will be described in detail below with reference to Figs. 2, 3 and 7. An elbow pipe 21 is connected to the tip of the resin injection tube 61, and one connecting port 21a (see Fig. 7) of the elbow pipe 21 is disposed vertically, with a part of the elbow pipe 21 being fixed to a mounting pedestal 22 fixed adjustably in position in vertical direction between the lower ends of the supporting posts 2. That is, the mounting pedestal 22 is fixed to an upper face of an air nipper 27 described later, an L-shaped fixing member 29 is integrated to the tip of the mounting pedestal 22, and on the outer periphery of the part of the connecting port 21a disposed vertically of the elbow pipe 21, a heater 28 in a wounded state is fixed to the fixing member 29 through plural U-shaped bolts 30. One end face of the injection nozzle N having a flange is made in contact with the end face of one connecting port 21a of the elbow pipe 21, and the flange 23 is tightened with a flange 24a of a flange nut 24 by screwing the flange nut 24 into an external screw 21b formed on the connecting port 21a of the elbow pipe 21, so as to connect the injection nozzle N to the connecting port 21a of the elbow pipe 21. A resin discharging port 25 of the injection nozzle N is constituted by a small diameter pore 25a on the rear end and a large diameter pore 25b on the front end, and the small diameter pore 25a and the large diameter pore 25b are connected with a tapered pore 25c. An upper end face of a stopper pipe P1 described later is pressed under pressure onto a tapered inner peripheral surface 26 of the tapered pore 25c. An air nipper 27 for squashing a stopper pipe P1 after filling up the liquid resin R in the tire inner tube C is disposed immediately below the injection nozzle N. The fixed position of the mounting pedestal 22 is adjustable in the vertical direction because the ascending amount of the tire T for making the upper end face of the stopper pipe P1 in contact under pressure with the tapered inner peripheral surface 26 of the injection nozzle N is optimized to facilitate insertion of the upper end of the stopper pipe P1 into the large diameter pore 25b of the injection nozzle N. In Fig. 3, symbol 19 denotes an air hose connected to the air nipper 27.

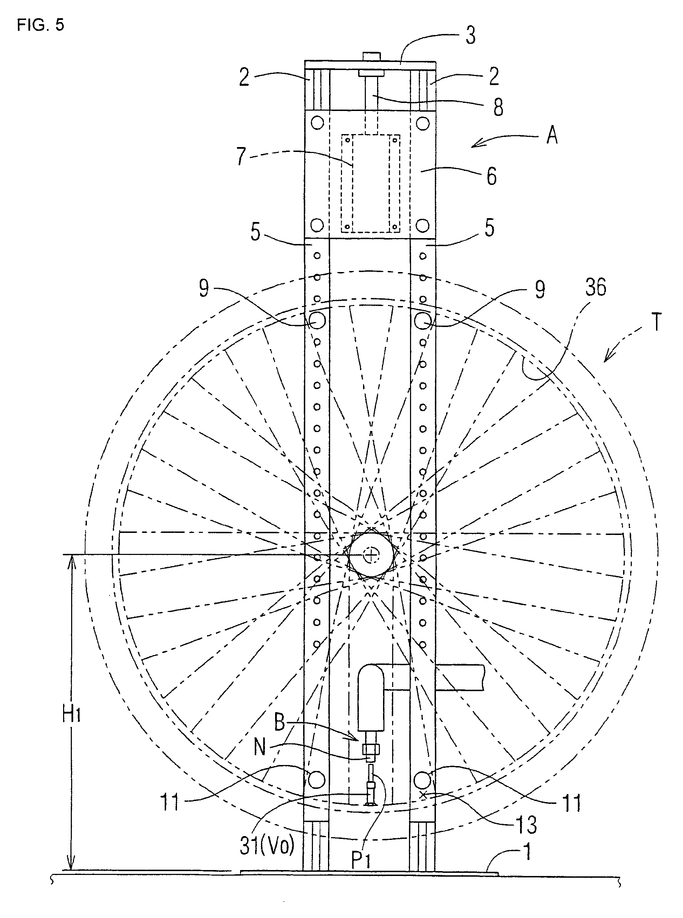

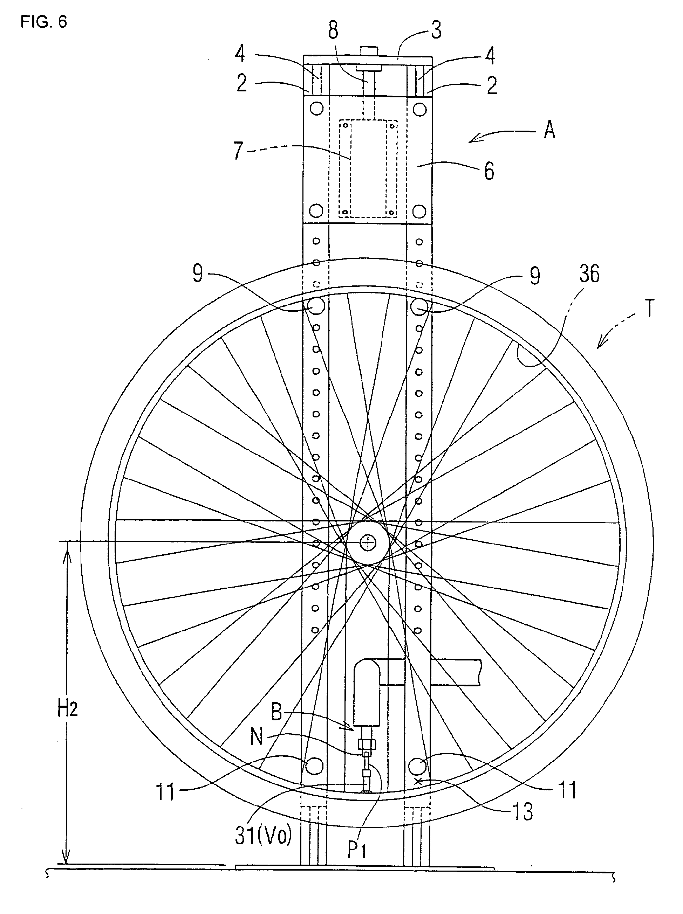

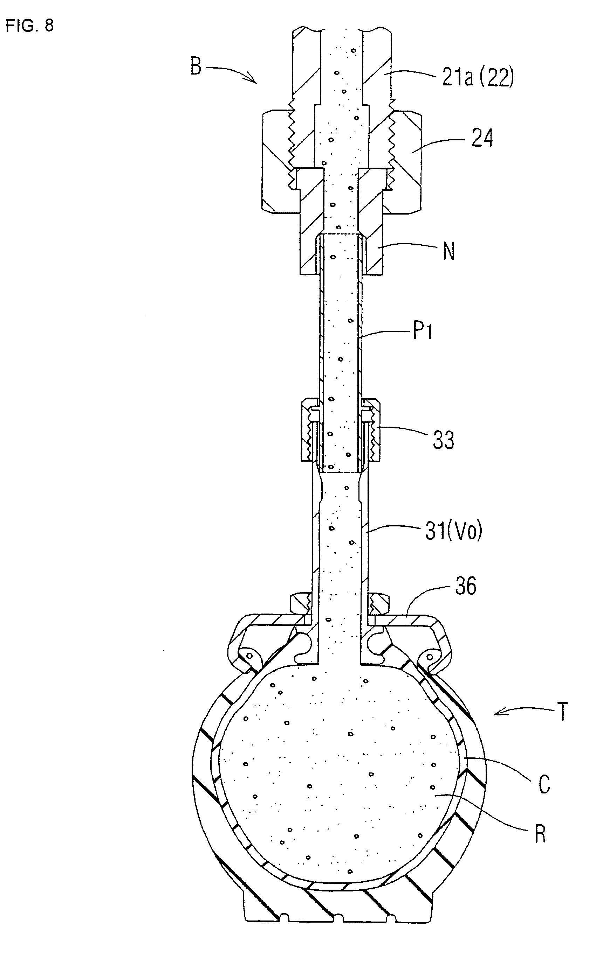

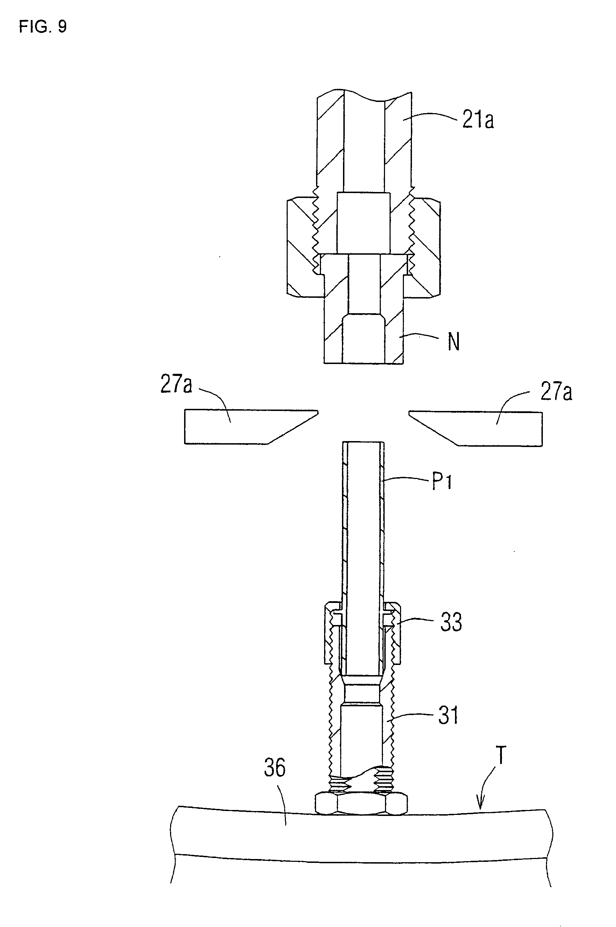

The sequence of injecting the liquid resin R into the tire inner tube C will be described with reference to Figs. 5 to 15. Fig. 5 is an elevational view of the state where a tire T is suspended by a tire suspending device A before inserting a stopper pipe P1 into an injection nozzle N (i.e., a tire suspending state before resin injection), Fig. 6 is an elevational view of the same in the state where the stopper pipe P1 is inserted into the injection nozzle N. Fig. 7 is an elevational cross sectional view of a part of a tire valve V0 and an injection nozzle N in the resin injection state, Fig. 8 is a cross sectional view on line X-X in Fig. 7 in the state where a liquid resin R is injected, and Figs. 9 to 15 are diagrams showing sequentially an operation of injecting a liquid resin R into a tire inner tube C.

The execution of the method for injecting a liquid resin R according to the invention requires the use of a single-use stopper pipe P1. As shown in Fig. 7, the stopper pipe P1 is constituted by a pipe main body 41 having an outer diameter that can be inserted in an aeration pore 32 of a valve main body 31 and a flange hole 34a of a valve nut 33, having provided on an intermediate thereof a flange 42 pressed with an inner flange 34 of the valve nut 33 onto the side of the valve main body 31 at the time of attachment of the valve nut 33 to the valve main body 31. The stopper pipe P1 not only has a function of connecting the tire valve V0 and the injection nozzle N to enable injection of the liquid resin R into the tire inner tube C, but also has, after injecting the liquid resin R into the tire inner tube C, a function of preventing the liquid resin R filled in the tire inner tube C from being leaked by squashing the intermediate exposed part thereof with an air nipper 27. Accordingly, the material of the stopper pipe P1 is necessarily such a material that can be easily squashed, and preferred examples thereof include copper and aluminum.

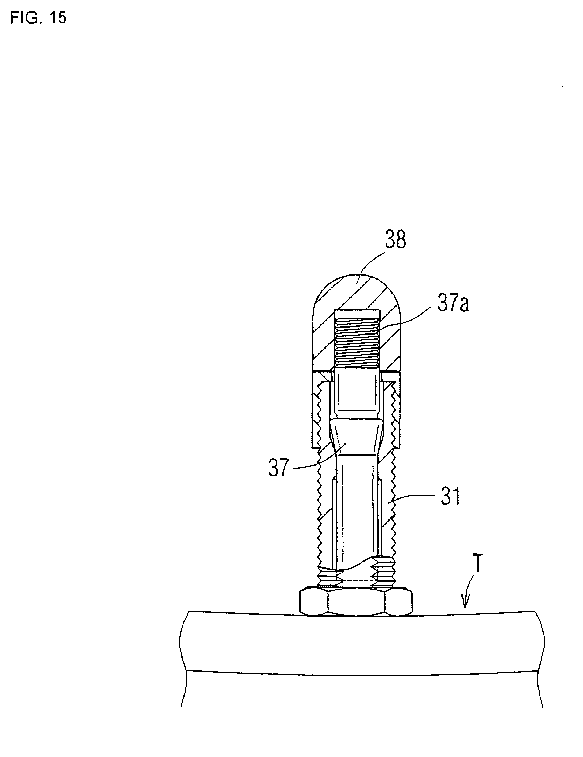

As shown in Fig. 9, the valve nut 33 having been screwed on the valve main body 31 of the tire valve V0 is detached, a plug (inflation tube) 37 having been installed in the aeration pore 32 (see Fig. 15) is taken out, and the lower end of the stopper pipe P1 is inserted in the aeration pore 32. According to the operation, the lower end face of the stopper pipe P1 is made in contact with a tapered inner peripheral surface 32a of the aeration pore 32. The valve nut 33 fit from the upper end of the stopper pipe P1 is rotated to screw on an external screw 31a on the outer peripheral surface of the valve main body 31, whereby the inner flange 34 of the valve nut 33 is made in contact with the flange 42 of the stopper pipe P1. Upon further rotating the valve nut 33 strongly, the lower end face of the stopper pipe P1 is pressed under pressure onto the tapered inner peripheral surface 32a to ensure a sealed state between the aeration pore 32 of the valve main body 31 and the stopper pipe P1.

As shown in Fig. 5, the tire T having the stopper pipe P1 mounted on the valve main body 31 is then suspended on tire suspending pipes 9 of a tire suspending device A. Thereafter, a rod 8 of an air cylinder 7 is retracted to ascend the tire T in a prescribed amount, whereby the stopper pipe P1 mounted on the valve main body 31 is inserted into a large diameter part 25b of an injection nozzle N disposed immediately above as shown in Fig. 6, and the upper end face of the stopper pipe P1 is pressed under pressure onto a tapered inner peripheral surface 26 of the injection nozzle N to ensure a sealed state between the injection nozzle N and the stopper pipe P1. In Figs. 5 and 6, symbols H1 and H2 show the heights from the upper surface of the pedestal 1 to the center of the tire T, and (H2-H1) indicates the ascending amount of the tire T.

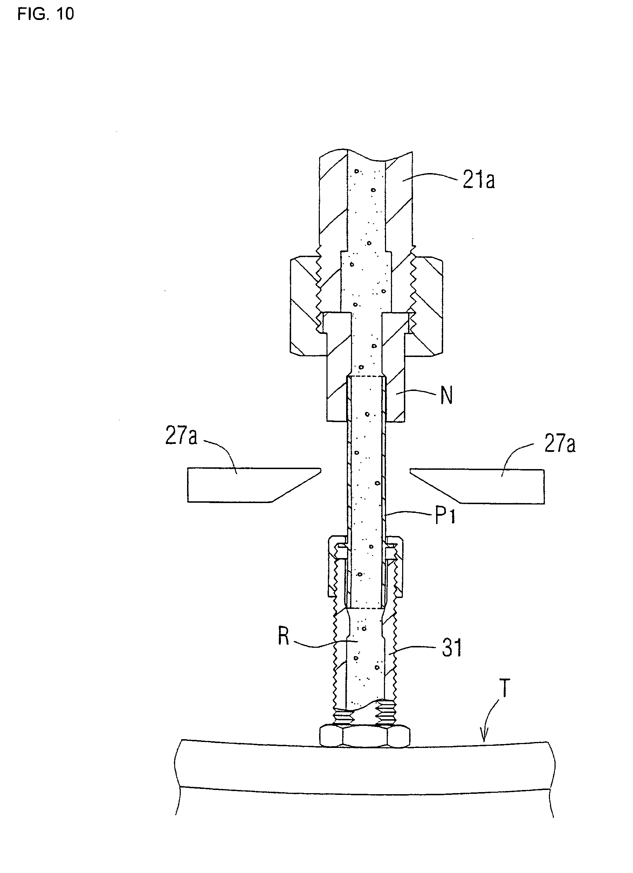

According to the operation, the injection nozzle N and the valve main body 31 are connected to each other through the stopper pipe P1 with a sealed state ensured. In this state, a pump J is driven to inject the liquid resin R in the resin tank K into the tire inner tube C through the resin injection tube 61, the injection nozzle device B, the stopper pipe P1 and the tire valve V0 (Fig. 10). The upper and lower ends of the stopper pipe P1 are in a sealed state ensured, and thus the liquid resin R can be injected to the tire inner tube C without leakage.

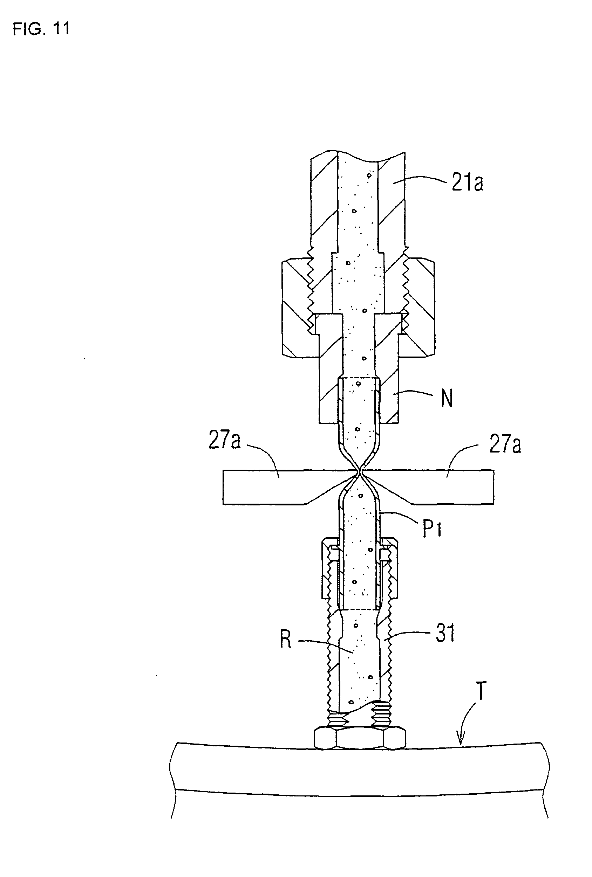

After confirming the tire inner tube C has been filled up with the liquid resin R, the operation of the pump J is terminated, and the closing valve V1 is closed. The air nipper 27, which has nipper blades 27a having a rounded tip disposed as opening on both sides of the stopper pipe P1, is then operated to squash the stopper pipe P1 at the intermediate exposed part thereof, and the liquid resin R filled in the tire inner tube C can be certainly prevented from being leaked (Fig. 11) . For further ensuring the prevention of leakage, after withdrawing the stopper pipe P1 from the injection nozzle N, the stopper pipe P1 is again squashed at another position with the air nipper 27 to make plural squashed positions.

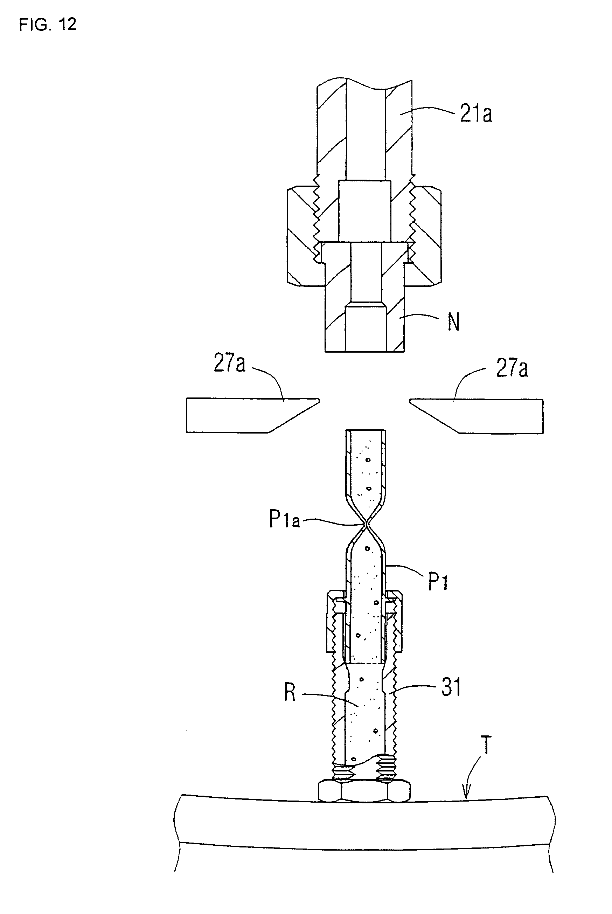

The rod 8 of the air cylinder 7 is then thrust, the tire T, which is still suspended on the pair of tire suspending pipes 9, is slightly descended, whereby the upper end face of the stopper pipe P1 is released from the tapered inner peripheral surface 26 of the injection nozzle N with the own weight of the tire T, and the upper end face of the stopper pipe P1 is withdrawn from the injection nozzle N (Fig. 12). There is a case after injecting the liquid resin R in the tire inner tube C where the stopper pipe P1 is adhered to the tapered inner peripheral surface 26 of the injection nozzle N due to partial gelation of the liquid resin R passing through the part of the injection nozzle N, and is not separated therefrom with the own weight of the tire T. In this case, the pair of tire suspending pipes 9 are separated from the rim 36 of the tire T for a slight moment by descending the sliding body 5, and immediately after that, the pair of tire depressing pipes 11 are made in contact with the rim 36 to depress the tire T, whereby the stopper pipe P1 can be certainly withdrawn from the injection nozzle N.

After withdrawing the upper end of the stopper pipe P1 from the injection nozzle N for separating them from each other, the tire T having the liquid resin R filled in the tire inner tube C is detached from the tire suspending device A, and then the subsequent tire T is suspended on the tire suspending device A for execution of the aforementioned process steps. The tire T thus detached from the tire suspending device A is allowed to stand as it is, whereby the liquid resin R filled in the tire inner tube C is gelled. Accordingly, the liquid resin R in the tire inner tube C is not gelled while the tire T is mounted on the tire suspending device A, but the tire T having been filled up with the liquid resin R is immediately detached from the tire suspending device A, and the resin filling operation is carried out for the subsequent tire T, whereby the filling operation of the liquid resin R in the tire inner tube C can be continuously carried out to improve the operation efficiency thereof.

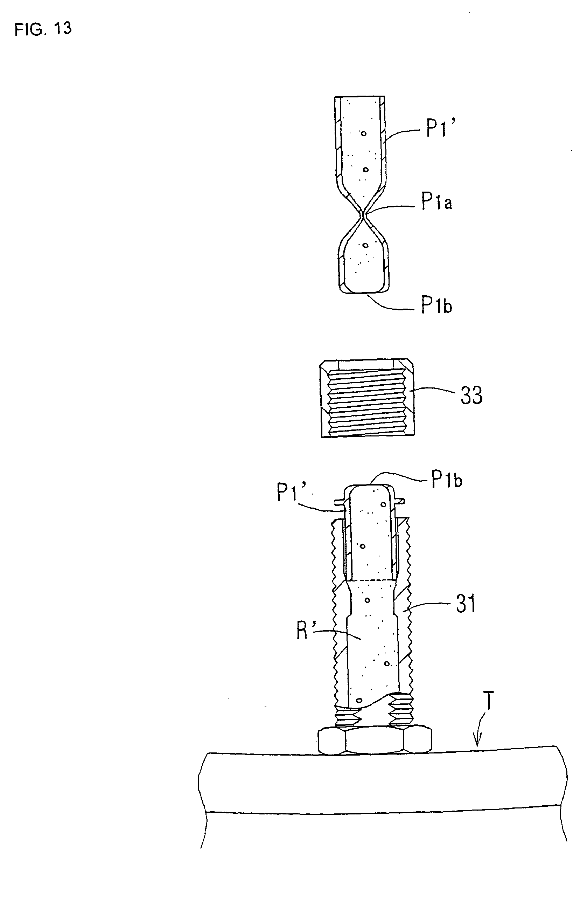

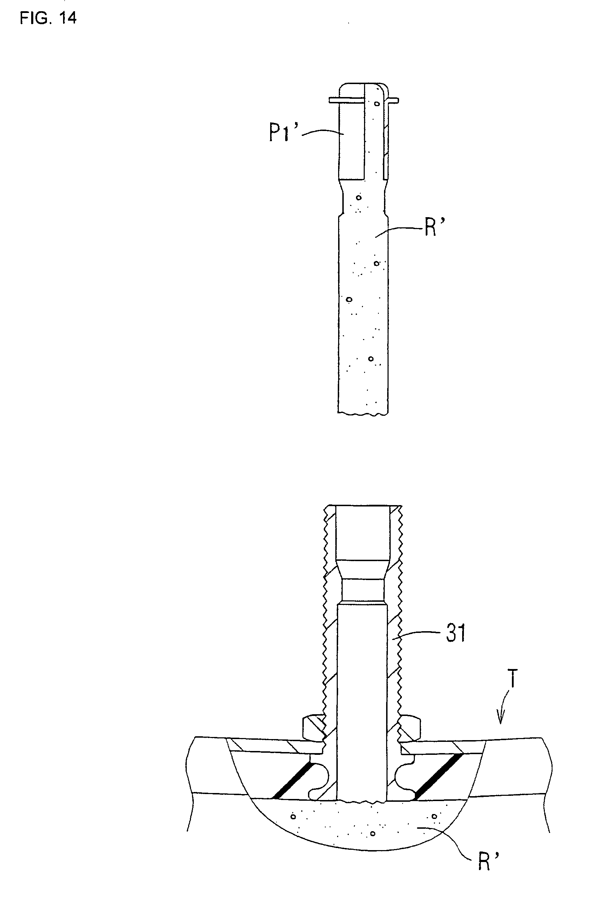

The stopper pipe P1 is then cut with a cutter at a position on the side of the valve main body 31 with respect to the squashed part P1a while preventing a part protruding from the outer peripheral surface thereof from occurring (Fig. 13), and the valve nut 33 is detached in this state. In Fig. 13, symbol P1' denotes the cut stopper pipe, and P1b denotes the cut part of the stopper pipe P1. Thereafter, the stopper pipe P1 is withdrawn from the valve main body 31 by holding the upper end of the cut stopper pipe P1, whereby the gelled resin inside the valve main body 31 continued from the gelled resin filled in the stopper pipe P1 is also withdrawn therewith (Fig. 14). In Figs. 13 and 14, symbol R' denotes the gelled resin. Finally, the plug 37 detached in the first step is placed back to the valve main body 31, and a cap 38 is screwed on an external screw 37a of the plug 37 (Fig. 15) . According to the operation, such a "puncture-free tire" can be obtained that has appropriate elastic rebound through gelation of the liquid resin R filled in the tire inner tube C. In the final step, the reason why the plug 37 is placed back to the valve main body 31, and the cap 38 is mounted thereon, for closing the aeration pore 32 of the valve main body 31 is that the gelled resin softened by solar heat is prevented from being leaked from the tire inner tube through the valve main body 31, and another auxiliary reason thereof is to ensure an appearance equivalent to an ordinary "pneumatic tire".

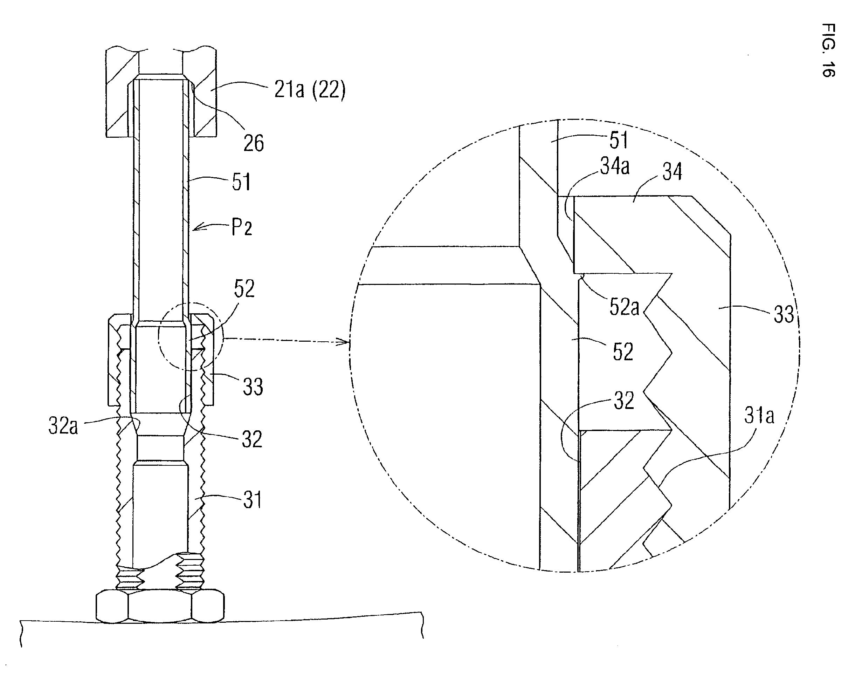

Fig. 16 shows an example where the liquid resin R is injected into the tire inner tube C by using another stopper pipe P2. The stopper pipe P2 has a general part 51 that is smaller than the inner diameter of the flange hole 34a of the valve nut 33, and an increased diameter part 52 that is larger than the inner diameter of the flange hole 34a and smaller than the inner diameter of the aeration pore 32 of the valve main body 31. The increased diameter part 52 of the stopper pipe P2 is inserted into the aeration pore 32 of the valve main body 31, and the valve nut 33 fit to the general part 51 is screwed on the external screw 31a of the valve main body 31, whereby the inner flange 34 of the valve nut 33 bites into the increased diameter part 52, and the lower end face of the stopper pipe P2 is pressed under pressure onto the tapered inner peripheral surface 32a of the aeration pore 32 of the valve main body 31 to make a sealed state. In Fig. 16, symbol 52a denotes a bite chip formed with the valve nut 33 biting into the upper end of the increased diameter part 52 of the stopper pipe P2.

In the aforementioned embodiment, the tire suspending pipes 9 are attached to the pair of left and right sliding bodies 5, which are ascended and descended by the function of the air cylinder 7, and the tire T is suspended on the pair of the left and right tire suspending pipes 9, whereby the suspended position of the tire T is stabilized without waving horizontally. Accordingly, there is such an advantage in that the tire T can be easily suspended on the tire suspending pipes 9 with the tire valve V0 disposed at the lowest position, and the suspended tire T is not waved horizontally to avoid deviation between the axis of the stopper pipe P1 (P2) mounted to the tire valve V0 and the axis of the injection nozzle N, so as to facilitate insertion of the stopper pipe P1 (P2) into the injection nozzle N. In the invention, however, the use of the pair of left and right tire suspending pipes 9 is not essential, and the tire T may be suspended on only one tire suspending pipe 9.

The tire suspending device A of the aforementioned embodiment has such a structure in that the injection nozzle device B is immobilized, and the suspended tire T is ascended and descended, and there is no necessity of ascending or descending the injection nozzle device B and the connecting part of the resin injection tube 61 connected to the device, so as to prevent advantageously these parts from being damaged. In the invention, however, the stopper pipe P1 (P2) mounted on the valve main body 31 of the tire T can be inserted into the injection nozzle N of the injection nozzle device B when the tire T suspended on the tire suspending device A and the injection nozzle device B are relatively ascended and descended, and accordingly, it is sufficient that at least one of the tire T suspended on the tire suspending device A and the injection nozzle device B is ascended and descended.

In the aforementioned embodiment, in order to withdrawn certainly the stopper pipe P1 (P2) mounted on the valve main body 31 of the tire T from the injection nozzle N after injecting the liquid resin R into the tire inner tube C, the tire depressing pipes 11 are attached horizontally to the lower ends of the pair of left and right sliding bodies 5, but in the invention, the tire depressing pipes 11 are not essential members.

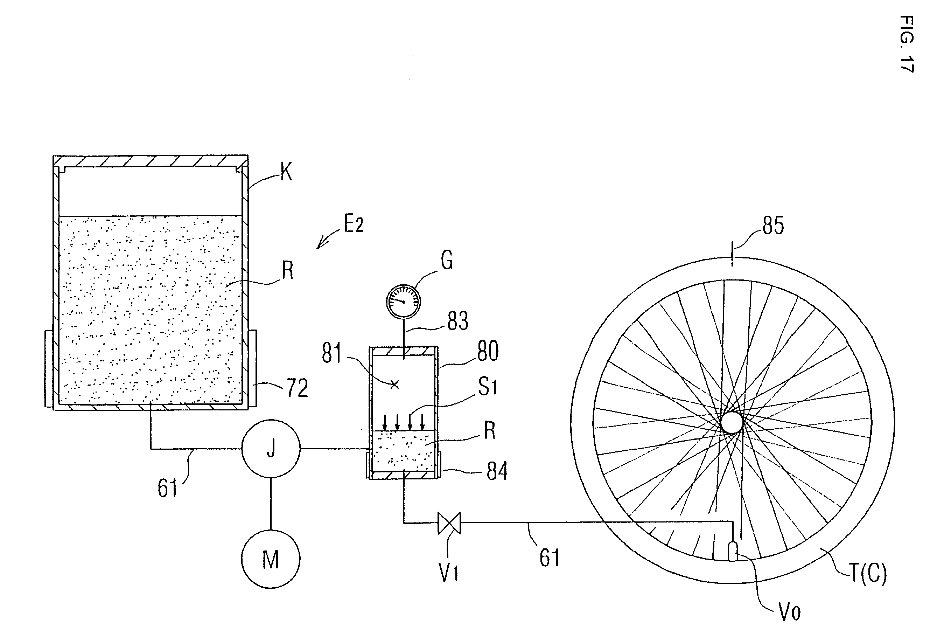

Another resin injection apparatus E2 will be described with reference to Fig. 17. Fig. 17 is an overall view of a resin injection apparatus E2 injecting the liquid resin R into the tire inner tube C by using an intermediate pressure accumulator tank 80. The intermediate pressure accumulator tank 80 is installed on the resin injection path connecting the resin tank K and the valve V0 of the tire T. The liquid resin R and air 81 discharged with the pump J are temporarily accumulated therein in a sealed state, and when the resin accumulation amount is increased, the sealed air 81 is compressed to decrease in volume, whereby the liquid resin R having been temporarily accumulated in the intermediate pressure accumulator tank 80 is then discharged from the intermediate pressure accumulator tank 80 with a pressure equal to the pressure S1 of the compressed air 81 having been increased in pressure. A pressure conduit 83 of a pressure gauge G penetrates through a top panel 82 of the intermediate pressure accumulator tank 80 to measure the pressure S1 of the air 81 sealed in the intermediate pressure accumulator tank 80. In Fig. 17, symbol 84 denotes a heater for heating the liquid resin R temporarily accumulated in the intermediate pressure accumulator tank 80.

Upon driving the pump J, the liquid resin R in the resin tank K is injected into the intermediate pressure accumulator tank 80 through the resin injection tube 61, and in the intermediate pressure accumulator tank 80, the sealed air 81 is decreased in volume through decompression to the extent corresponding to the amount of the liquid resin R injected. When the pressure of the compressed air 81 reaches the pressure S1, at which the liquid resin R temporarily accumulated can be discharged, the liquid resin R temporarily accumulated in the intermediate pressure accumulator tank 80 is discharged from the intermediate pressure accumulator tank 80 and injected into the tire inner tube C through the resin injection tube 61 and the tire valve V0. The resin filling pressure S0 in the tire inner tube C is substantially equal to the atmospheric pressure (ca. 0.1 MPa) before the liquid resin R is filled in the tire inner tube C until substantially "fill-up". Upon making the liquid resin R in the tire inner tube C close to "fill-up", the resin filling pressure S0 in the tire inner tube C becomes close to the pressure of the compressed air 81 in the intermediate pressure accumulator tank 80, and the resin filling pressure S0 in the tire inner tube C then becomes equal to the pressure S1 of the compressed air 81 in the intermediate pressure accumulator tank 80 after reaching "fill-up". Accordingly, after filling the liquid resin R in the tire inner tube C to reach "fill-up", the filling pressure of the liquid resin R can be found by reading the pressure S1 of the compressed air 81 with the pressure gauge G mounted on the intermediate pressure accumulator tank 80, and the liquid resin R can be injected into the tire inner tube C at the prescribed filling pressure, for example, by driving momentarily the pump J immediately before completing the filling operation for final adjustment of the pressure. In order to fill the liquid resin R in the tire inner tube C until "fill-up", it is necessary to evacuate air remaining in the tire inner tube C, and the air is removed by pushing a needle through the highest part of the tire inner tube C.

As still another resin injection apparatus, there is such a method in that "fill-up" is detected by measuring the weight of the liquid resin R filled in the tire inner tube C from the difference between the weight of the tire T and the tire suspending device A before filling the liquid resin R in the tire inner tube C and the weight of the tire T and the tire suspending device A after filling. This utilizes the fact that the weight of the liquid resin R required for "fill-up" of the tire inner tube C of a particular size is constant irrespective to the injection pressure, the injection time and the like. Specifically, the liquid resin R is filled in the state where the tire suspending device A having the tire T suspended thereon is placed on a weighing device, and the injection operation of the liquid resin R is terminated when the increment of the measured weight with the weighing device reaches the weight of the liquid resin R necessary for "fill-up".

The elastic resin composition according to the invention as a raw material of the liquid resin R filled in the tire inner tube C will be described in detail. The elastic resin composition of the invention is a composition containing a thermoplastic elastomer and a process oil, to which a tackifier is added. The thermoplastic elastomer is a styrene thermoplastic elastomer, which is a block copolymer constituted by a polystyrene block and an elastomer block having a polyolefin structure. Specific examples of the styrene thermoplastic elastomer include a polystyrene-poly(ethylene/propylene) block polymer (SEP) and a polystyrene-poly(ethylene/propylene) block-polystyrene polymer (SEEPS). In addition to the aforementioned styrene thermoplastic elastomers, SBS (styrene-butadiene-styrene copolymer), SEBS (styrene-ethylene-butadiene-styrene copolymer), SEBC (styrene-ethylene-butadiene-highly crystalline ethylene copolymer), SEPS (styrene-ethylene-propylene-styrene copolymer) and the like may be similarly used.

The process oil constituting the elastic resin composition contains a mineral oil, such as a naphthene oil and a paraffin oil. This is used as a plasticizer or a softener for the thermoplastic elastomer. The same function of the process oil is obtained by using a naphthene oil, a paraffin oil or a mixture thereof, and a naphthene oil is used in the embodiment of the invention.

The tackifier constituting the elastic resin composition of the invention is a resin added for imparting an adhesion force to the gelled elastic resin composition. Examples thereof include a terpene resin, an α-pinene resin, a β-pinene resin, an aromatic-modified terpene resin, a hydrogenated terpene resin, a rosin ester resin, a hydrogenated rosin resin and an aliphatic hydrocarbon resin. The advantage can be expected similarly with any of the aforementioned resins, and an aromatic-modified terpene resin and a hydrogenated terpene resin are used in the embodiment of the invention.

The mixing ratios of the raw materials are adjusted to optimize the conditions including the viscosity (flowability) of the elastic resin composition in a molten state, the elasticity (shock absorption property) of the gelled elastic resin composition, and the shape retaining property capable of retaining the shape immediately after gelation for a prolonged period of time. In the case where an elastic resin composition is produced with a mixing ratio of the thermoplastic elastomer as a raw material of less than 10% by weight or a mixing ratio of the process oil of more than 85% by weight, the concentration of the thermoplastic elastomer with respect to the process oil is decreased, and the elastic resin composition formed through gelation is considerably soft. The riding quality thereof is like riding with a punctured tire without a moderate repulsive (elastic) force from the ground, which cannot be ridden lightly due to the feeling like the tire adhered to the ground. In the case where an elastic resin composition is produced with a mixing ratio of the thermoplastic elastomer of more than 20% by weight or a mixing ratio of the process oil of less than 65% by weight, the concentration of the thermoplastic elastomer with respect to the process oil is increased, and the elastic resin composition formed through gelation is considerably hard. The riding quality thereof is deteriorated since slight irregularity on the ground affects a human body as significant shock or vibration due to the too large repulsive (elastic) force from the ground. Furthermore, the melt viscosity at 160°C exceeds 300 P, and it becomes difficult to inject from a valve having a small bore diameter (the melt viscosity at 160°C will be described later in detail). According to the factors, it is suitable in the invention that the mixing ratios are from 10 to 20% by weight for the thermoplastic elastomer and from 65 to 85% by weight for the process oil.

The method for injecting the elastic resin composition R in a molten state into the tire inner tube C is as described in the foregoing, and the following two points are to be considered as conditions required to the liquid resin R when injected since the liquid resin R at a high temperature is injected into a tire inner tube through a valve V0 having a small bore diameter. The first point is that the temperature, at which the liquid resin R is injected, is such an extent in that the liquid resin does not thermally deteriorate the tire and the tire inner tube, which are formed of a polymer compound, such as synthetic rubber, and an adhesive used for adhering them, and the second point is that the viscosity (viscosity coefficient) of the liquid resin R in this state is such an extent in that the liquid resin can be pressed into the inner tube without delay through a valve having a small bore diameter (ca. from 1 to 3 mm).

It has been considered that the temperature, at which the liquid resin R is injected, that prevents the tire, the inner tube and the adhesive from suffering adverse affect due to thermal deterioration is about 200°C at most.

In the case where the viscosity is 100 P or less, the liquid resin R can easily flow through a valve having a minimum bore diameter of about 1 mm, and the efficiency of injection of the liquid resin R into the tire inner tube C is improved. It is expected that there is substantially no molten state of the liquid resin R where the viscosity thereof is 10 cP or less, and in the case where the viscosity exceeds 300 P, the flowability thereof is lowered, and injection through the valve becomes difficult.

The elastic resin composition according to the invention exhibits a melt viscosity of from 10 cP to 300 P at 160°C. Accordingly, since the elastic resin composition satisfies the aforementioned two conditions, the liquid resin R heated to 160°C in the resin tank K is pressed into and filled in the tire inner tube C through the tire valve V0 by using the resin injection apparatus E1, E2, and the operation can be carried out within a short period of time.

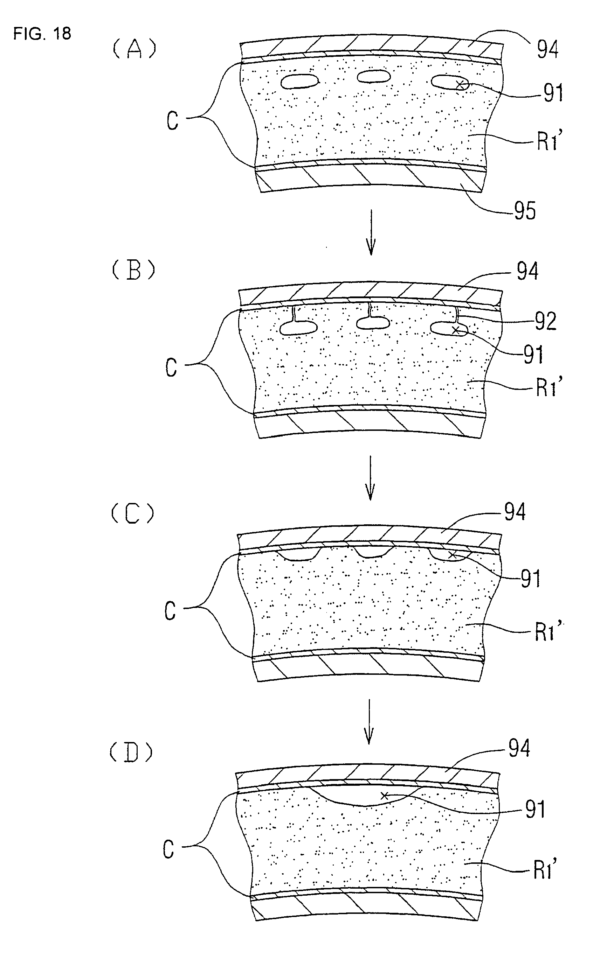

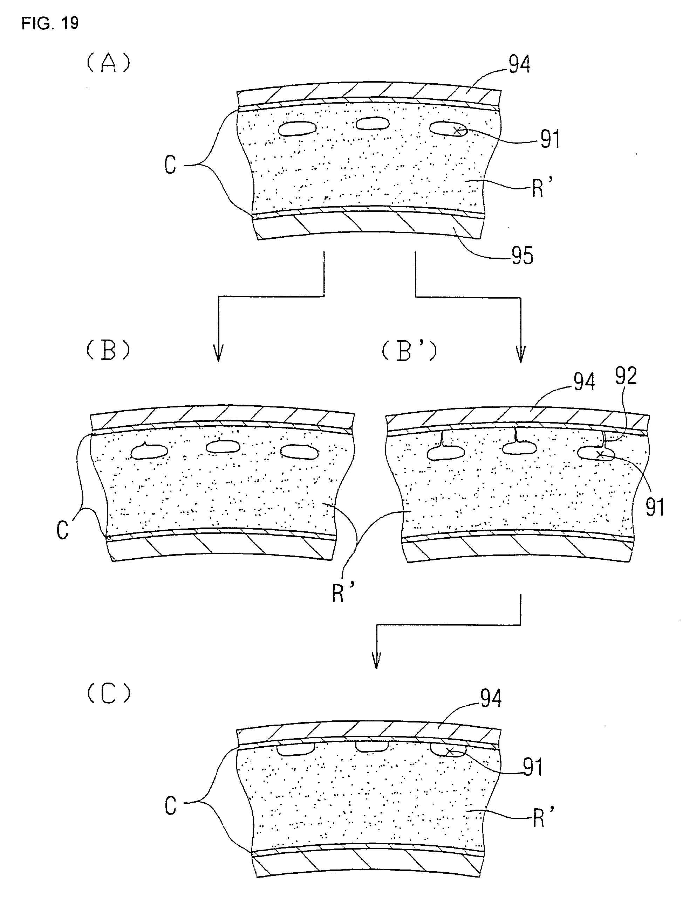

The relationship between the adhesion force of the elastic resin composition (resin) R' after gelation by cooling to the inner peripheral surface of the tire inner tube C and the riding quality will be described with reference to Figs. 18 and 19. Fig. 18 includes partial cross sectional views of a tire in the peripheral direction thereof, showing change of air bubbles 91 entrained in the tire inner tube C upon filling the elastic resin composition R1 in a liquid state having no adhesion force after gelation. In the case where the elastic resin composition R1 in a liquid state is insufficiently filled in the tire inner tube C, or air is entrained upon injecting the elastic resin composition R1 in a liquid state, spaces (air bubbles 91) are formed within the elastic resin composition R1' after gelation by cooling (Fig. 18 (A)). In the case where the tire is ridden, cracks 92 are gradually formed between the inner peripheral surface of the tire inner tube C and the air bubbles 91 by receiving pressure from the ground (Fig. 18 (B)). Upon forming the cracks 92, the gelled elastic resin composition R1' wets the inner peripheral surface of the tire inner tube C through the cohesive force thereof, but the cracks 92 formed are gradually expanded due to lack of adhesion force, whereby the air bubbles 91 are accumulated at the interface between the inner peripheral surface of the tire inner tube C and the elastic resin composition R1' (Fig. 18(C)). The air bubbles 91 formed at the interface between the inner peripheral surface of the tire inner tube C and the elastic resin composition R1' grow by accumulating the surrounding air bubbles 91 through running with the tire, and produce a large air bubble 91 present at the interface between the inner peripheral surface of the tire inner tube C and the elastic resin composition R1' (Fig. 18(D)). In the case where the large air bubble 91 is formed, the large air bubble 91 is largely deformed by compression as compared to the small air bubbles 91 dispersed within the elastic resin composition R1'. Accordingly, shock or vibration like "clunk" is received on every rotation of the running tire, which deteriorates the riding quality. In Fig. 19, symbols 94 and 95 denote the outer surface of the tire and the rim of the wheel, respectively.

Fig. 19 includes partial cross sectional views of a tire in the peripheral direction thereof, showing change of air bubbles 91 entrained in the tire inner tube C upon filling the elastic resin composition R in a liquid state having an adhesion force after gelation. In the case where the elastic resin composition R in a liquid state is insufficiently filled in the tire inner tube C, or air is entrained upon injecting the elastic resin composition R in a liquid state, as similar to the above case, spaces (air bubbles 91) are formed within the elastic resin composition R' after gelation by cooling (Fig. 19 (A)). In the case where the tire is ridden, the elastic resin composition R' has an adhesion force, and the elastic resin composition R' is adhered to the inner peripheral surface of the tire inner tube C, whereby the cracks 92 are hard to occur even upon receiving pressure from the ground (Fig. 19(B)). Even though the cracks 92 are formed, the cracks 92 are not expanded owing to the high adhesiveness of between the tire inner tube C and the elastic resin composition R', and it is a rare case where the air bubbles 91 are accumulated at the interface between the tire inner tube C and the elastic resin composition R' (Fig. 19(B')). Furthermore, even though the air bubbles 19 are accumulated at the interface, they do not grow to a large air bubble since the adhesion force of the elastic resin composition R' to the inner peripheral surface of the tire inner tube C overtakes the force of unifying the accumulated air bubbles 91 for energetic stabilization, and thus they stay as the small air bubbles 91 at the interface between the inner peripheral surface of the tire inner tube C and the elastic resin composition R'. Accordingly, upon running for a certain period of time, there occurs no uneven part of the elastic resin composition R' receiving large compression deformation like the large air bubble although the small air bubbles 91 are dispersed in the tire inner tube C, and therefore, there is less affect of shock or vibration upon running with the tire to maintain good riding quality for a prolonged period of time.

In the invention, for improving the adhesiveness between the tire inner tube and the elastic resin composition, an adhesion force is imparted to the gelled elastic resin composition, and therefor the resin as a tackifier is mixed in addition to the thermoplastic elastomer and the process oil as raw materials of the elastic resin composition. A tackifier generally provides high adhesion force or cohesive force with a low concentration, and the mixing amount of the tackifier is controlled to exhibit an adhesion force that is sufficient for maintaining the good riding quality of the tire.

In the invention, a perpendicular peeling force is employed as an index of the adhesion force of the gelled elastic resin composition. While the evaluation method of the perpendicular peeling force is described later, the gelled elastic resin composition is lightly pressed onto a resin adhesion wall standing perpendicularly to the horizontal plane, and then is pulled in the horizontal direction to peel from the resin adhesion wall. The pulling force upon peeling is measured and is converted to a value per unit area for evaluation of the adhesion force of the elastic resin composition to the resin adhesion wall, which is designated as an index of the adhesion force of the elastic resin composition to the tire inner tube.

In the case where the perpendicular peeling force of the gelled elastic resin composition is less than 0.1 N/cm², the adhesion force of the elastic resin composition to the resin adhesion wall is small. That is, the adhesiveness between the inner peripheral surface of the tire inner tube and the elastic resin composition is low, and sufficient advantage cannot be expected for maintaining good riding quality. In the case where the perpendicular peeling force exceeds 0.5 N/cm², the mixing amount of the tackifier is too large with respect to the thermoplastic elastomer, and thus the gelled elastic resin composition becomes hard and loses elasticity, which deteriorates the riding quality.

In the invention, the tackifier is mixed in an amount of from 5 to 15% by weight, whereby the elastic resin composition exhibits a perpendicular peeling force of from 0.1 to 0.5 N/cm² after gelation by cooling, and the adhesiveness between the tire inner tube and the elastic resin composition can be ensured. Accordingly, the gelled elastic resin composition has adhesiveness to the inner tube in addition to the elasticity (shock absorption property) thereof, and therefore, the tire having the same filled therein can provide good riding quality as a tire.

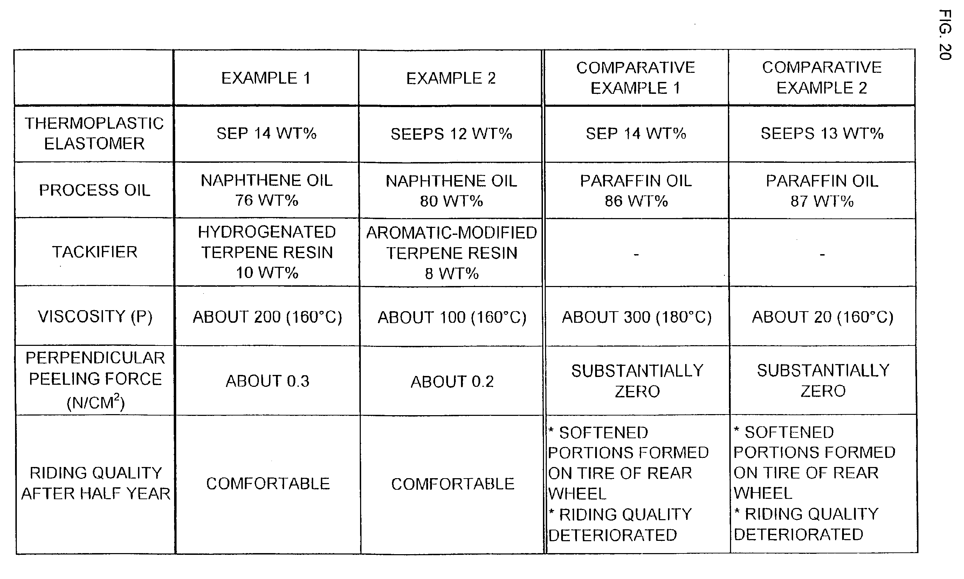

Elastic resin compositions were evaluated for cases where a tackifier was mixed and was not mixed. The evaluation results are shown in Fig. 20 as Examples and Comparative

### Examples.

### [Example 1]

As raw materials, 14% by weight of a polystyrene-poly(ethylene/propylene) block polymer (SEP), "Septon 1000 Series" containing no oil, a trade name, produced by Kuraray Co., Ltd., as the thermoplastic elastomer, 76% by weight of a naphthene oil, "Sunpreme 150", a trade name, produced by Japan Sun Oil Co., Ltd., as the process oil, and 10% by weight of a hydrogenated terpene resin, "Clearon P125", a trade name, produced by Yasuhara Chemical Co., Ltd., as the tackifier were melted and mixed at 200°C to prepare an elastic resin composition. The elastic resin composition had a viscosity of about 100 P at 160°C and a perpendicular peeling force of about 0.3 N/cm² after gelation by cooling. A bicycle equipped with tires having the elastic resin composition injected therein at 160°C by using the aforementioned resin injection apparatus was ridden comfortably without problem after half a year.

### [Example 2]

As raw materials, 12% by weight of a polystyrene-poly(ethylene-ethylene/propylene) block-polystyrene polymer (SEEPS), "Septon 4000 Series" containing no oil, a trade name, produced by Kuraray Co., Ltd., as the thermoplastic elastomer, 80% by weight of a naphthene oil, "Sunpreme 150", a trade name, produced by Japan Sun Oil Co., Ltd., as the process oil, and 8% by weight of an aromatic-modified terpene resin, "YS Resin TO125", a trade name, produced by Yasuhara Chemical Co., Ltd., as the tackifier were melted and mixed at 200°C to prepare an elastic resin composition. The elastic resin composition had a viscosity of about 100 P at 160°C and a perpendicular peeling force of about 0.2 N/cm² after gelation by cooling. A bicycle equipped with tires having the elastic resin composition injected therein at 160°C by using the aforementioned resin injection apparatus was ridden comfortably without problem after half a year.

### [Comparative Example 1]

As raw materials, 14% by weight of a polystyrene-poly(ethylene/propylene) block polymer (SEP), "Septon 1000 Series" containing no oil, a trade name, produced by Kuraray Co., Ltd., as the thermoplastic elastomer, and 86% by weight of a paraffin oil, "Diana Process Oil PW-32", a trade name, produced by Idemitsu Kosan Co., Ltd., as the process oil were melted and mixed at 200°C to prepare a resin. The resin had a viscosity of about 300 P at 180°C and a perpendicular peeling force of substantially zero after gelation by cooling. A bicycle equipped with tires having the elastic resin composition injected therein at 180°C by using the aforementioned resin injection apparatus suffered softened portions in a part of the rear wheel and deterioration in riding quality after half a year.

### [Comparative Example 2]

As raw materials, 13% by weight of a polystyrene-poly(ethylene-ethylene/propylene) block-polystyrene polymer (SEEPS), "Septon 4000 Series" containing no oil, a trade name, produced by Kuraray Co., Ltd., as the thermoplastic elastomer, and 87% by weight of a paraffin oil, "Diana Process Oil PW-32", a trade name, produced by Idemitsu Kosan Co., Ltd., as the process oil were melted and mixed at 200°C to prepare a resin. The resin had a viscosity of about 20 P at 160°C and a perpendicular peeling force of substantially zero after gelation by cooling. A bicycle equipped with tires having the elastic resin composition injected therein at 160°C by using the aforementioned resin injection apparatus suffered softened portions in a part of the rear wheel and deterioration in riding quality after half a year.

The evaluation method for perpendicular peeling force will be described with reference to Fig. 21. A digital push gauge 101 is constituted by a gauge main body 101a and a spring part 101b. The digital push gauge 101 smoothly moves on a sliding rail 102 for pulling test along the rail. One end of the spring part 101b is attached to the gauge main body 101a for measuring the extent of expansion and contraction due to the load of the spring part 101b as a force. The other end of the spring part 101b is attached to a jig 103 for evaluation test of perpendicular peeling force (which is hereinafter abbreviated as "jig 103"). A test piece 104 of a gelled elastic resin composition having an appropriate size is produced and fixed to the tip of the jig 103. The test piece 104 fixed to the jig 103 is pressed onto a resin adhesion wall 105 perpendicular to the horizontal plane with an appropriate force for adhering lightly. The digital push gauge 101 is pulled horizontally with a force Q to peel the test piece 104 from the resin adhesion wall 105. The pulling force upon peeling is measured with the gauge main body 101a and is converted to a value per unit area (1 cm²). The converted value is designated as the perpendicular peeling force.

## Claims

1. A method for injecting a resin, which is in a liquid state by heating an elastic resin composition, into a tire inner tube of a bicycle or the like, **characterized in that**:
a stopper pipe is used to press under pressure one end of the stopper pipe onto a tapered inner peripheral surface of an aeration pore of a valve main body by tightening a nut of the valve, to make a sealed state and to prevent the stopper pipe from being released with a resin pressure after filling;
in a state where the stopper pipe is mounted to the valve main body in the aforementioned manner, an injection nozzle device and the valve of the tire are made relatively close to each other to press under pressure the other end of the stopper pipe onto a tapered inner peripheral surface of a resin discharging port of an injection nozzle to make a sealed state, whereby the injection nozzle and the valve main body are connected with the stopper pipe with the sealed state maintained; and
in the connected state, the liquid resin is injected into the tire inner tube through the stopper pipe and the valve until fill-up, the stopper pipe is squashed at an intermediate position thereof immediately after filling up, to prevent the filled resin from being leaked, and in the state, the liquid resin filled in the tire inner tube is gelled.

2. The method for injecting a liquid resin into a tire inner tube according to claim 1, **characterized in that** the stopper pipe has a flange at an intermediate position of a pipe main body having an outer diameter that is capable of being inserted into the aeration pore of the valve main body, and the flange is pressed under pressure toward the side of the valve main body with an inner flange of the nut of the valve by tightening the nut of the valve to the valve main body.

3. The method for injecting a liquid resin into a tire inner tube according to claim 1, **characterized in that** the stopper pipe has an increased diameter part having an outer diameter that is smaller than an inner diameter of the aeration pore of the valve main body and is larger than an inner diameter of the inner flange of the nut of the valve, and a general part having an outer diameter that is smaller than the inner diameter of the inner flange of the nut of the valve.

4. An apparatus for injecting a liquid resin into a tire inner tube for carrying out the invention according to claim 1, **characterized in that** the apparatus comprises:
a tire suspending device having a tire suspending pipe that is attached thereto substantially horizontally and is for suspending a tire having a stopper pipe mounted thereto by having been inserted into a tire valve at a position of a prescribed height of a supporting post, and
an injection nozzle device having an injection nozzle that is disposed substantially immediately above the valve of the tire suspended on the tire suspending pipe of the tire suspending device to make the valve of the tire be disposed at the lowest position;
at least one of the tire suspending pipe and the injection nozzle device is capable of being ascended and descended by a driving means; and
at least one of the tire suspending pipe and the injection nozzle device is ascended or descended such that the distance therebetween is decreased, whereby an upper end of the stopper pipe mounted on the valve of the tire suspended on the tire suspending pipe on the supporting post is inserted into a resin discharging port of the injection nozzle of the injection nozzle device and is pressed under pressure onto a tapered inner peripheral surface thereof.

5. The apparatus for injecting a liquid resin into a tire inner tube according to claim 4, **characterized in that** a pair of the tire suspending pipes are disposed with a prescribed distance in a horizontal direction.

6. The apparatus for injecting a liquid resin into a tire inner tube according to claim 4 or 5, **characterized in that** a sliding body capable of being ascended and descended is supported by the supporting post through a driving means, and the tire suspending pipe is supported by the sliding body.

7. The apparatus for injecting a liquid resin into a tire inner tube according to claim 6, **characterized in that** the sliding body has a length exceeding an outer diameter of the tire, and a tire depressing pipe is attached substantially horizontally to a lower end of the sliding body, the tire depressing pipe depressing the tire after filling the tire inner tube with the liquid resin for detaching the stopper pipe from the injection nozzle.

8. An elastic resin composition for filling a tire inner tube by injecting into the tire inner tube through an inflation valve of the tire, **characterized by** comprising from 10 to 20% by weight of a styrene thermoplastic elastomer, from 5 to 15% by weight of a tackifier and from 65 to 85% by weight of a process oil, and having a melt viscosity of from 10 cP to 300 P at a melting temperature of 160°C.

9. The elastic resin composition for filling a tire inner tube according to claim 8, **characterized in that** the gelled elastic resin composition has a perpendicular peeling force of from 0.1 to 0.5 N/cm² at ordinary temperature.
